# FASCICULE DE BREVET EUROPEEN

(11) **EP 2 937 929 B1**
(45) Date de publication et mention de la délivrance du brevet: **16.11.2016**
(21) Numéro de dépôt: 15164957.1
(22) Date de dépôt: 24.04.2015
(51) Int. Cl.: H01M 10/0562, H01M 10/052, H01M 4/38, H01M 4/58

(54) **ELECTROLYTE SOLIDE POUR MICRO BATTERIE**
FESTER ELEKTROLYT FÜR MIKROBATTERIE
SOLID ELECTROLYTE FOR MICRO-BATTERY

(30) Priorité: 24.04.2014 FR 1453710
(43) Date de publication de la demande: 28.10.2015
(73) Titulaire: COMMISSARIAT A L'ENERGIE ATOMIQUE ET AUX ENERGIES ALTERNATIVES, 75015 Paris (FR)
(72) Inventeur: Le Van-Jodin, Lucie, 54000 Nancy (FR); Claudel, Arnaud, 54410 Laneuville devant Nancy (FR); Martin, Steve, 38160 Saint Sauveur (FR); Secouard, Christophe, 38000 Grenoble (FR)
(74) Mandataire: Brizio Delaporte, Allison

(56) Documents cités:
- US-A1- 2004 137 330
- WANG B ET AL: "Synthesis, Crystal Structure, and Ionic Conductivity of a Polycrystalline Lithium Phosphorus Oxynitride with the .gamma.-Li3PO4 Structure", JOURNAL OF SOLID STATE CHEMISTRY, ORLANDO, FL, US, vol. 115, no. 2, 1 mars 1995 (1995-03-01), pages 313-323, XP002420380, ISSN: 0022-4596, DOI: 10.1006/JSSC.1995.1140
- BATES J B ET AL: "Fabrication and characterization of amorphous lithium electrolyte thin films and rechargeable thin-film batteries", JOURNAL OF POWER SOURCES, ELSEVIER SA, CH, vol. 43-44, 15 mars 1993 (1993-03-15), pages 103-110, XP002435988, ISSN: 0378-7753
- WANG B ET AL: "Ionic conductivities and structure of lithium phosphorus oxynitride glasses", JOURNAL OF NON-CRYSTALLINE SOLIDS, NORTH-HOLLAND PHYSICS PUBLISHING. AMSTERDAM, NL, vol. 183, no. 3, 1 avril 1995 (1995-04-01) , pages 297-306, XP004067935, ISSN: 0022-3093, DOI: 10.1016/0022-3093(94)00665-2

## Description

### DOMAINE TECHNIQUE

La présente invention concerne un électrolyte solide pour microbatteries, une microbatterie comprenant ledit électrolyte solide et un procédé de fabrication dudit électrolyte.

L'invention trouvera son application dans le domaine des microbatteries et notamment pour les microbatteries « tout solides » pour améliorer leur puissance. Elle pourra également trouver son application dans d'autres domaines utilisant des électrolytes solides et notamment dans le domaine des électrochromes. En effet, les électrochromes en couches minces peuvent utiliser les mêmes matériaux que les microbatteries.

### ETAT DE LA TECHNIQUE

Les microbatteries « tout-solides » sont des composants électrochimiques de stockage d'énergie de taille réduite. Typiquement d'une épaisseur inférieure à 15µm. Elles sont fabriquées via des technologies empruntées à la microélectronique. La spécificité des batteries « tout-solide » est de posséder un électrolyte solide.

L'électrolyte le plus couramment utilisé dans les microbatteries est le LiPON. C'est un matériau amorphe, composé de lithium, de phosphore, d'oxygène et d'azote. Ce composé est décrit dans la publication Bates et al. J. Pow. Sou. 43-44 (1993) 103-110 et dans le document US-A-5338625. Le composé précis décrit par Bates est LiₓPO_{y}N_{z} avec x∼2,8, 0,16<z<0,46, 2y=3z ∼7,8. Sa conductivité est donnée à 1,6x10⁻⁶ S/cm.

Wang et al., J. Solid State Chem., vol. 115, no 2, p. 313-323 (1995) divulgue un électrolyte solide comportant une couche comprenant du LixPOy, exempte d'azote, avec x=2.7 et y=3.9.

De nombreuses publications mettent en évidence le rôle important de la composition chimique de l'électrolyte sur les performances des microbatteries. Le paramètre le plus unanimement admis est que l'augmentation du ratio N/P augmente la conductivité ionique. Bates montre que le Li_{2.7}PO_{3.9} a une conductivité de 7,10⁻⁸S/cm alors que le Li_{2.9}PO_{3.3}N_{0.46} a une conductivité de 3,3x10⁻⁶S/cm.

Toutefois, il est toujours nécessaire d'améliorer les performances des microbatteries pour satisfaire aux nouvelles applications de celles-ci notamment étiquettes RF-ID, carte à puce, mémoire...

### EXPOSE DE L'INVENTION

La présente invention propose à cet effet un électrolyte solide comprenant une couche comprenant du LixPOy ne comprenant pas d'azote et dont les taux de lithium et d'oxygène sont contrôlés pour être tels que 3,6 ≤ x ≤ 6,3 et 1,5 ≤ y ≤ 4.

Avantageusement, il a été observé qu'un électrolyte solide selon l'invention présente une conductivité ionique supérieure ou égale à 10⁻⁵S/cm.

L'augmentation de la conductivité ionique de l'électrolyte permet essentiellement d'améliorer la tenue en puissance des batteries. Il est possible de travailler avec des courants plus élevés sans perdre en capacité. L'invention permet ainsi d'améliorer significativement les performances des microbatteries. De manière facultative, l'invention peut en outre présenter au moins l'une quelconque des caractéristiques suivantes prises séparément ou en combinaison:
Suivant un autre aspect, l'invention concerne une microbatterie comprenant au moins une couche d'électrolyte tel que décrit ci-dessus. Une microbatterie selon l'invention présente des performances améliorées.

Suivant un autre aspect, l'invention concerne un procédé de fabrication d'un électrolyte tel que décrit ci-dessus comprenant une étape de dépôt physique en phase vapeur (PVD pour Physical Vapor Deposition en anglais) à partir d'une cible de Li₃PO₄ pulvérisée sous azote de manière à obtenir une couche comprenant du LiₓPO_{y}, exempte d'azote, avec 3,6 ≤ x ≤ 6,3 et 1,5 ≤ y ≤ 4. Ce procédé permet avantageusement de ne pas déposer d'azote dans la couche d'électrolyte.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :

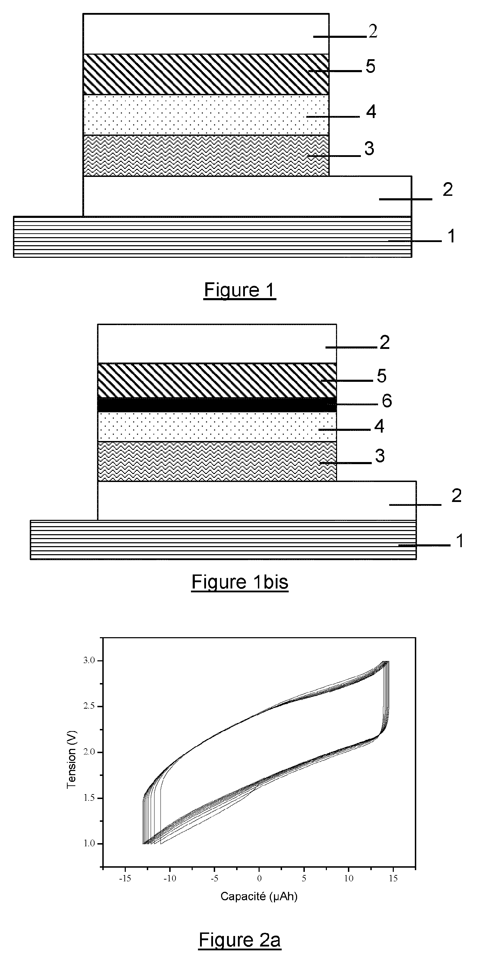

Figure 1 : Structure classique d'une microbatterie « tout solide ».
Figure 1 bis : Structure classique d'une microbatterie avec une couche de protection entre l'électrolyte et l'anode.
Figures 2 : Différences de potentiels pour des cycles de charges et de décharges de batteries avec une forte résistance interne (a), avec une faible résistance interne (b).
Figure 3 : Composition du LiPO-1 et du LiPO-2 en fonction de la conductivité ionique, comparativement au LiPON standard du laboratoire.
Figure 4: Structure Metal Insulator Metal (MIM)
Figure 5a : Diagramme de Niyquist d'une MIM Ti/électrolyte/Ti (S=0.1cm²). Courbe expérimentale en gris et fit en noir.
Figure 5b : circuit équivalent utilisé pour le fit
Figure 6 : Permittivité relative de l'électrolyte Li₄PO_{2,6} en fonction de la fréquence.
Figure 7 : Cyclage d'une batterie Li-ion LiTiOS/LiPO/Si entre 1 et 3V.
Figure 8 : Diagramme de Niyquist d'une batterie avec un électrolyte bi-couche selon l'invention
Figure 9 : Cyclage entre 1 et 3V d'une batterie TiOS/LiPO/LiPON/Li.

### EXPOSE DETAILLE DE MODES DE REALISATIONS PARTICULIERS

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention porte sur un électrolyte solide comportant une couche comprenant du LiₓPO_{y}, exempte d'azote, avec 3,6 ≤ x ≤ 6,3 et 1,5 ≤ y ≤ 4.

Avantageusement, x et y sont tels que la conductivité ionique est supérieure ou égale à 10⁻⁵ S/cm.

Avantageusement, le rapport Li/O de la couche comprenant du LiₓPO_{y} est supérieur à 1, avantageusement supérieur ou égal à 1,5.

Avantageusement, la couche comprenant du LiₓPO_{y} comprend un autre élément en quantité inférieure à 2,5% avantageusement inférieur à 1%.

Avantageusement, la couche comprenant du LiₓPO_{y} est exclusivement une couche de LiₓPO_{y}.

Avantageusement, la couche comprenant du LiₓPO_{y} est telle que x est égal à 4 et y est égal 2,6.

Avantageusement, la couche comprenant du LiₓPO_{y} est telle que x est égal à 3,6 et y est égal 2,3.

Avantageusement, le rapport Li/P est supérieur ou égal à 3,6.

Avantageusement, le rapport O/P est inférieur ou égal à 4.

Avantageusement, l'électrolyte est amorphe.

Avantageusement, l'électrolyte comprend une couche de protection de la couche comprenant du LiₓPO_{y}.

Avantageusement, la couche de protection a une épaisseur minimale de 0,5nm et d'une épaisseur maximale de 35% de l'épaisseur de la couche comprenant du LiₓPO_{y}.

Avantageusement, la couche de protection est un électrolyte solide.

Avantageusement, la couche de protection est en électrolyte solide choisi parmi le LiPON ou le Li_{z}SiO_{w}.

Avantageusement, l'électrolyte est un bi-couche préférentiellement LiₓPO_{y}/LiPON ou LiₓPO_{y}/Li_{z}SiO_{w}.

Avantageusement, la couche de protection est choisie parmi le Al₂O₃, Si, Li₂O.

Un autre objet de l'invention est une microbatterie comprenant au moins une couche d'électrolyte solide tel que décrit ci-dessus.

Avantageusement, la microbatterie comprend une couche de protection de la couche comprenant du LiₓPO_{y}.

Avantageusement, la couche de protection a une épaisseur minimale de 0,5nm et d'une épaisseur maximale de 35% de l'épaisseur de la couche comprenant du LiₓPO_{y}.

Avantageusement, la couche de protection est un électrolyte solide.

Avantageusement, la couche de protection est un électrolyte solide choisi parmi le LiPON ou le LizSiOw.

Avantageusement, l'électrolyte est un bi-couche préférentiellement LiₓPO_{y}/LiPON ou LiₓPO_{y}/Li_{z}SiO_{w}.

Avantageusement, la couche de protection est choisie parmi le Al₂O₃, Si, Li₂O.

Un autre objet de l'invention est un procédé de fabrication d'un électrolyte tel que décrit ci-dessus comprenant une étape de dépôt physique en phase vapeur (PVD pour Physical Vapor Deposition en anglais) à partir d'une cible de Li₃PO₄ pulvérisée sous azote de manière à obtenir une couche comprenant du LiₓPO_{y}, exempte d'azote, avec 3,6 ≤ x ≤ 6,3 et 1,5 ≤ y ≤ 4.

Avantageusement, la pulvérisation de la cible est effectuée sans magnétron.

Une microbatterie telle qu'illustrée en figure 1 et 1bis, est réalisée par l'empilement successif des couches suivantes :
- un substrat 1
- un collecteur de courant 2
- un matériau de cathode 3
- un matériau électrolyte 4 avec éventuellement une couche de protection 6 un matériau d'anode 5
- un collecteur de courant 2

La spécificité des batteries « tout-solide » est de posséder un électrolyte 4 solide. Le rôle de cet électrolyte 4 est d'assurer le transport des ions lithium d'une électrode à l'autre de la batterie tout en bloquant le passage des électrons. Le mode de réalisation le plus couramment utilisé pour la réalisation de cet électrolyte 4 est la pulvérisation cathodique d'une cible sous vide.

Le principe de fonctionnement d'une microbatterie repose sur le principe d'oxydo-réduction d'ions lithium transitant entre un matériau d'anode 5 et un matériau de cathode 3 par l'électrolyte 4. Les électrons échangés lors ces réactions transitent par un circuit extérieur assurant de ce fait la charge ou la décharge de la batterie.

L'apport de lithium dans la structure peut se faire soit par l'emploi direct d'une couche de lithium métallique comme anode 5 dans ce cas on parle de « batterie lithium » soit par l'utilisation d'au moins un matériau d'électrode 4 lithié dans ce cas on parle de « batterie Li-ion ».

Selon l'invention, un électrolyte 4 solide comprenant une couche comprenant du LiₓPO_{y} avec 3,6≤x≤6,3 et 1,5≤y≤4 présente des propriétés de conductivité particulièrement intéressantes. Les valeurs x et y sont des valeurs molaires. Ces valeurs sont préférentiellement déterminées par mesure de composition chimique RBS (Spectrométrie de Rétrodiffusion Rutherford) et NRA (Nuclear Reaction Analysis).

La couche comprenant du LixPOyselon l'invention ne contient pas d'azote. Toutefois, la conductivité ionique est très nettement supérieure à la conductivité ionique des électrolytes de l'état de l'art. Préférentiellement, les indices x et y sont choisis de sorte que l'électrolyte possède une conductivité ionique supérieure ou égale à 10⁻⁵S/cm. Avantageusement, la conductivité électrique est quant à elle sensiblement identique.

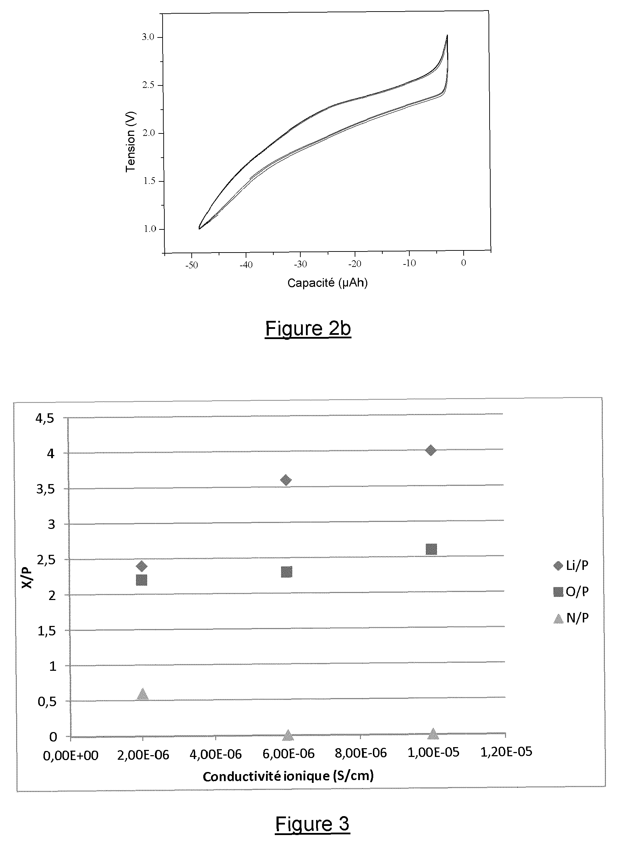

L'une des caractéristiques des batteries est leur résistance interne, c'est elle qui va déterminer le comportement de la batterie sous des forts courants de charge ou de décharge. Cette résistance est fortement dépendante de la conductivité ionique de l'électrolyte. Avec un électrolyte dont la conductivité ionique est augmentée, il est possible de travailler à des courants plus élevés sans perdre en capacité. La résistance interne est plus élevée et la différence de potentiel en passant du régime de charge au régime de décharge, ou l'inverse, est importante, donc plus la gamme de potentiel réellement cyclée sera faible. Des différences de potentiels sont illustrées pour des cycles de charges et de décharges de batterie à forte résistante figure 2a et à faible résistance figure 2b.

Selon une possibilité, la couche comprenant du LiₓPO_{y} contient un autre élément en quantité inférieure à 2,5% avantageusement inférieur à 1% molaire. Cet élément est par exemple du bore. Il peut dépendre des cibles utilisées pour la fabrication de l'électrolyte. Cet élément n'est pas l'azote. Dit d'une façon alternative, l'électrolyte solide selon l'invention comprend une couche de LiₓPO_{y}A_{α} avec A n'étant pas de l'azote et avec 0 ≤ α ≤ 2,5.

Préférentiellement, les indices x et y sont choisis de sorte que le rapport Li/O soit supérieur à 1, avantageusement supérieur ou égal à 1,5. A titre d'exemple préféré le matériau est Li₄PO_{2,6}.

L'électrolyte solide selon l'invention est amorphe.

En figure 3, la conductivité ionique est indiqué pour trois électrolyte : LiPON : électrolyte de l'état de la technique, LiPO-1 : Li_{3,6}PO_{2,3}, LiPO-2 : Li₄PO_{2,6}. Les ratios Li/P ; O/P et N/P sont représentés pour chacun des électrolytes.

On constate sur cette figure une différence notamment de conductivité ionique des électrolytes selon l'invention LiPO-1 et LiPO-2 par rapport à LiPON. On peut constater également une augmentation du ratio Li/P alors que les autres ratios restent sensiblement stables lors de l'augmentation de la conductivité ionique.

Il est à noter que de manière surprenante cet électrolyte selon l'invention possède également une bonne stabilité électrochimique.

A titre d'exemple, le rôle spécifique, la nature chimique et les épaisseurs typiques de chaque couche de la microbatterie sont décrits ci-dessous à titre d'exemple:
- les collecteurs de courant 2 sont métalliques et peuvent être par exemple à base de Pt, Cr, Au, Ti, W, Mo, Ni. Les épaisseurs de ces collecteurs de courant 2 sont préférentiellement comprises entre 100 nm et 1µm, généralement 250nm. Ils servent à conduire le courant de façon homogène jusqu'aux électrodes 3, 5.
- La cathode 3 ou l'électrode positive peut être constituée de LiCoO₂, LiNiO₂, LiMn₂O₄, CuS, CuS₂, WO_{y}S_{z}, TiO_{y}S_{z}, LiTiS₂, Li₃TiS₃, V₂O₅. Selon les matériaux choisis, un recuit thermique peut être nécessaire pour augmenter la cristallisation des films et leur propriété d'insertion. C'est notamment le cas pour les oxydes lithiés. Néanmoins, certains matériaux amorphes, notamment des oxysulfures de titane, ne nécessitent pas un tel traitement tout en permettant une insertion élevée d'ions lithium. L'épaisseur de la cathode 3 est préférentiellement comprise entre 100 nm et 10µm. La cathode 3 est le lieu de la réduction du lithium lors de la décharge de la microbatterie et de l'oxydation de celui-ci en charge
- L'électrolyte 4 selon l'invention est un bon conducteur ionique et isolant électronique. Il est décrit ci-dessus. L'épaisseur typique est préférentiellement de 1,4µm mais elle doit être ajustée en fonction de l'épaisseur des électrodes 3 et 5: elle peut varier entre 500 nm et 3µm.
- L'anode 5 peut être du lithium métallique déposé par évaporation thermique, un alliage métallique à base de lithium ou bien un composé d'insertion (SiTON, SnNₓ, InNₓ, Si, Li₄Ti₅O₁₂, SnO₂...). Il existe également des microbatteries sans anode appelées Li free. Dans ce cas, une couche de métal bloquant le lithium est déposée. Le lithium vient alors se déposer sur cette couche. L'épaisseur de l'anode 5 est préférentiellement comprise entre 100 nm et 10µm. L'anode 5 est le siège de l'oxydation du Lithium lors de la décharge de la microbatterie et de la réduction lors de la charge.

Selon un mode de réalisation, l'empilement décrit ci-dessus est encapsulé. L'encapsulation a pour objet de protéger l'empilement actif de l'environnement extérieur et spécifiquement de l'humidité. Différentes stratégies peuvent être utilisées : encapsulation à partir de couches minces, encapsulation à partir de co-laminés, ou encore encapsulation par capotage, tel que par exemple un capot en verre maintenu par du parafilm.

Selon un mode de réalisation de l'invention, la microbatterie comprend une couche de protection 6 de la couche comprenant du LiₓPO_{y}. Cette couche de protection est destinée à protéger l'interface entre la couche comprenant du LiₓPO_{y} et un métal. A titre d'exemple, cette couche de protection 6 est présente entre la couche comprenant du LiₓPO_{y} et l'anode 5 lorsque celle-ci est métallique telle qu'en titane ou en lithium. Cette couche de protection 6 empêche la formation d'une forte résistance d'interface néfaste au cyclage de la batterie. La couche de protection 6 permet de réduire la résistance interne de la batterie en gardant de bonnes interfaces électrodes/électrolyte. Son épaisseur est préférentiellement d'au minimum 0.5 nm et au maximum de 35% de l'épaisseur de la couche comprenant du LiₓPO_{y}.

Suivant ce mode de réalisation, la couche de protection 6 peut-être un électrolyte solide. L'électrolyte solide de la couche de protection 6 est choisi parmi LiPON ou LizSiOw. La couche de protection 6 forme avec la couche 4 de LixPOy, un électrolyte au moins bi-couche comprenant une couche comprenant du LiₓPO_{y} et une couche de protection de type électrolyte. L'électrolyte au moins bi-couche est avantageusement LixPOy/ LiPON ou de LixPOy/ LizSiOw.

Selon une autre possibilité, la couche de protection 6 peut ne pas être un conducteur ionique tel que par exemple Al2O3, Si, Li2O ou plus généralement des matériaux de mauvaise conductivité ionique, préférentiellement la couche de protection est déposée de façon suffisamment fine pour permettre le passage des ions lithium.

Selon un autre aspect, l'invention concerne un procédé de fabrication d'un électrolyte tel que décrit ci-dessus. Le procédé selon l'invention comprend une étape de dépôt de la couche comprenant du LiₓPO_{y} en phase vapeur. Ce dépôt se fait par exemple à partir d'une cible de type Li₃PO₄ pulvérisée, avantageusement sans utilisation d'un magnétron. Le lithium, le phosphore et l'oxygène sont apportés par la cible. Selon une possibilité, la pulvérisation est réalisée sous azote.

Contrairement au procédé de l'état de la technique l'azote n'est pas intégré dans la couche comprenant du LiₓPO_{y}. Cette différence est notamment due à l'absence de magnétron. Le fait de réaliser la pulvérisation sans magnétron permet d'obtenir un matériau très riche en lithium, notamment Li/P ≥ 3 et relativement pauvre en oxygène, notamment O/P ≤ 4. Le rapport Li/P de l'électrolyte déposé est supérieur à celui de la cible et le rapport O/P est lui inférieur à celui de la cible. La cible peut être consommée de manière inhomogène. Avec la présente invention les taux d'oxygène et de lithium déposés sont contrôlés notamment par la puissance, la pression, le gaz utilisé préférentiellement réglés directement sur le dispositif de dépôt.

Selon une possibilité d'autres gaz peuvent être utilisés pour la pulvérisation par exemple : l'argon, l'oxygène, l'hélium, le xénon, le néon, le krypton ou des mélanges de ces gaz tel que par exemple un mélange azote/argon, un mélange azote/oxygène, un mélange argon/azote/oxygène. Préférentiellement, le débit du gaz ou du mélange de gaz est compris entre 20 et 200sccm.

Avantageusement, la pression dans la chambre est comprise entre 0,5 et 30 mTorr, préférentiellement 4,5 mTorr. Préférentiellement, le substrat 1, plus généralement dénommé l'échantillon, est au potentiel flottant. Cette disposition permet d'obtenir un électrolyte plus riche en lithium et ayant donc une meilleure conductivité ionique.

### Exemple 1 :

Dépôt d'un électrolyte selon l'invention et mesure de ses performances.

L'électrolyte couche mince est déposé par PVD. La cible utilisée est Li₃PO₄ et on réalise une pulvérisation sous azote sans magnétron.

Le débit d'azote est de 100 sccm. La pression dans la chambre est de 4.5 mTorr. L'échantillon est au potentiel flottant.

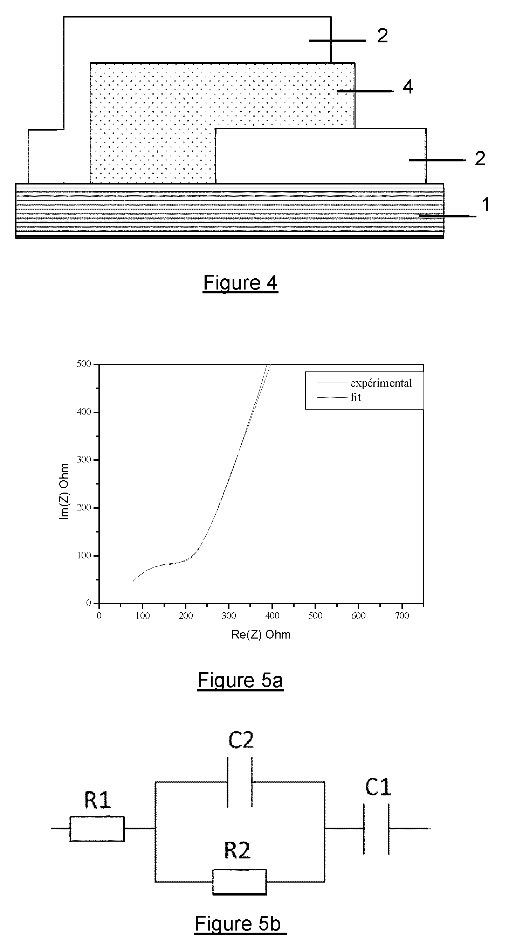

L'électrolyte est caractérisé par une structure MIM (Metal Insulator Metal) Titane /électrolyte/Titane. Cette structure est illustrée en Figure 4. Une structure MIM est réalisée par l'empilement successif des couches suivantes :
- un substrat 1
- un collecteur de courant 2
- un matériau électrolyte 3 avec éventuellement une couche de protection non représentée
- un collecteur de courant 2

Le titane du collecteur de courant 2 est déposé par PVD, les couches déposées sont localisées par masquage mécanique. L'épaisseur de chaque collecteur de courant 2 est de 250 nm et peut varier entre 250nm et 500nm. L'épaisseur de l'électrolyte 4 est de 1400nm et peut varier entre 500 nm et 2000 nm.

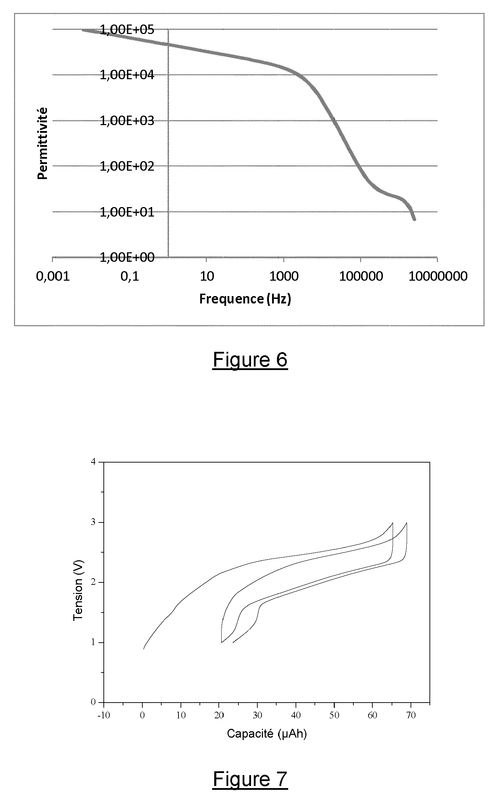

Dans ce cas, l'électrolyte déposé est une couche de Li₄PO_{2,6}. Cet électrolyte est amorphe. Sa conductivité ionique a été mesurée par spectroscopie d'impédance entre 1 MHz et 1mHz avec un deltaV de 10mV. La courbe présentée sur la figure 5a est typique d'un électrolyte. La valeur du diamètre du demi-cercle permet de calculer la conductivité ionique. La valeur du demi-cercle est déterminée par régression mathématique en faisant un fit avec le logiciel ECLab à partir d'un circuit équivalent illustré en figure 5b contenant : une résistance de contact R1 en série avec un circuit parallèle R2, C2 et en série avec une capacité C1, La conductivité ionique est de 10-⁵S/cm. La conductivité électronique est de 10⁻¹³S/cm. La permittivité est d'environ 20εₒ illustré en Figure 6.

### Exemple 2

Dans cet exemple, l'électrolyte Li₄PO_{2,6} est intégré dans une batterie du type LiTiOS/LiPO/Si qui cycle entre 1 et 3V. Les collecteurs de courant 2 sont en titane, ils font 250 nm d'épaisseur et sont déposé par PVD. La cathode 3 est en TiOS déposé par PVD réactive d'une cible de titane sous H2S et l'épaisseur de la couche est de 1,2µm. 250 nm de lithium sont déposés sur la cathode 2 en TiOS par évaporation. Ils diffusent rapidement à travers le TiOS. L'électrolyte 4 LiₓPO_{y} est déposé de la même façon que dans l'exemple 1. L'électrode négative, l'anode 5 est en silicium déposé par PVD d'une cible de silicium sous argon et fait 10 nm d'épaisseur. La batterie est cyclée entre 1 et 3V à 1C. Les résultats sont illustrés en figure 7. On voit que la batterie cycle correctement.

### Exemple 3

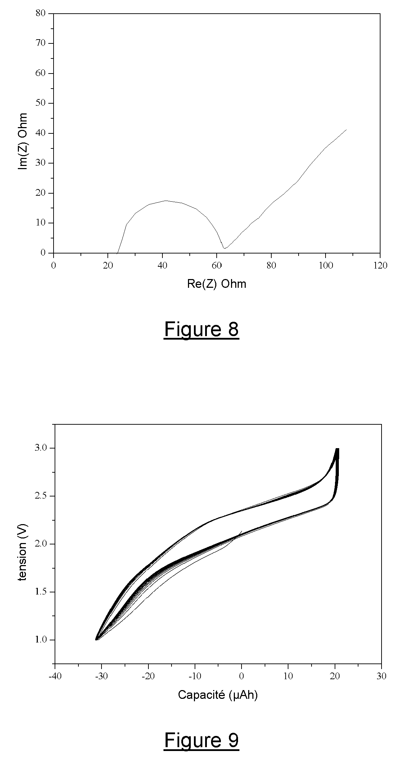

Dans cet exemple, on dépose l'électrolyte Li₄PO_{2.6} comme décrit précédemment et on dépose au-dessus une fine couche de LiPON. Cette fine couche forme une couche de protection de l'électrolyte Li₄PO_{2.6}. Le LiPON est déposé par PVD Radiofréquence avec magnétron d'une cible Li₃PO₄ (90%mol) - Li₂O - B₂O₃. L'épaisseur de l'électrolyte Li₄PO_{2.6} peut être de 1,4µm et celle du LiPON de 100 à 500nm. L'électrolyte 4 est alors formé par un bi-couche LiPO/LiPON. Cette application permet de réduire la résistance interne de la batterie en gardant de bonnes interfaces électrodes/électrolyte. La résistance de l'électrolyte bi-couche (LiPO + LiPON) est de 40 Ohms (Figure 8). Elle a été mesurée par spectroscopie d'impédance entre 1MHz et 1mHz avec un deltaV de 10mV. La résistance est donnée par la valeur du ½ cercle. La même épaisseur en LiPON donnerait une résistance de 120 Ohms. Ce bi-couche a une conductivité équivalente à 5.10⁻⁶S/cm.

### Exemple 4

Dans cet exemple, l'électrolyte LiPO/LiPON est intégré dans une batterie du type TiOS/LiPO/LiPON/Li qui cycle entre 1 et 3V. Le collecteur de courant 2 est en titane, il fait 250 nm d'épaisseur et est déposé par PVD. La cathode 3 est en TiOS déposé par PVD réactive d'une cible de titane sous H2S et l'épaisseur de la couche est de 1,2µm. Le LiPO de l'électrolyte bi-couche est déposé de la même façon que dans l'exemple 1 et fait 1,4µm et le LiPON de l'électrolyte bi-couche est déposé comme dans l'exemple 3 et fait 250nm. L'anode 5 est en lithium déposé par évaporation et fait 2µm d'épaisseur. Le lithium sert également de collecteur de courant 2 du côté de l'anode 5. La batterie est cyclée entre 1 et 3V à 0,75C. On peut voir sur la Figure 9 que la polarisation est très faible.

### REFERENCES

- 1.: Substrat
- 2.: Collecteur de courant
- 3.: Cathode
- 4.: Electrolyte
- 5.: Anode
- 6.: Couche de protection

## Revendications

1. Electrolyte solide comportant une couche comprenant du LiₓPO_{y}, exempte d'azote, avec 3,6 ≤ x ≤ 6,3 et 1,5 ≤ y ≤ 4.

2. Electrolyte selon la revendication précédente dans lequel x et y sont tels que la conductivité ionique est supérieure ou égale à 10⁻⁵ S/cm.

3. Electrolyte selon l'une quelconque des revendications précédentes dans lequel le rapport Li/O de la couche de LiₓPO_{y} est supérieur à 1 et avantageusement supérieure ou égal à 1,5.

4. Electrolyte selon l'une quelconque des revendications précédentes dans lequel la couche comprenant du LiₓPO_{y} comprend un autre élément en quantité inférieure à 2,5% et avantageusement inférieure à 1%.

5. Electrolyte solide selon l'une quelconque des revendications 1 à 3 dans lequel la couche comprenant du LiₓPO_{y} est exclusivement une couche de LiₓPO_{y}.

6. Electrolyte selon l'une quelconque des revendications précédentes dans lequel la couche comprenant du LiₓPO_{y} est telle que x est égal à 4 et y est égal 2,6.

7. Electrolyte selon l'une quelconque des revendications 1 à 5 dans lequel la couche comprenant du LiₓPO_{y} est telle que x est égal à 3,6 et y est égal 2,3.

8. Microbatterie comprenant au moins une couche d'électrolyte solide selon l'une quelconque des revendications précédentes.

9. Microbatterie selon la revendication précédente comprenant une couche de protection de la couche comprenant du LiₓPO_{y} d'une épaisseur minimale de 0,5nm et d'une épaisseur maximale de 35% de l'épaisseur de la couche comprenant du LiₓPO_{y}.

10. Microbatterie selon la revendication précédente dans lequel la couche de protection est un électrolyte solide.

11. Microbatterie selon la revendication précédente dans lequel la couche de protection est un électrolyte solide choisi parmi le LiPON ou le LizSiOw.

12. Microbatterie selon la revendication 9 dans lequel la couche de protection 6 est choisie parmi Al₂O₃, Si, Li₂O.

13. Procédé de fabrication d'un électrolyte selon l'une quelconque des revendications 1 à 7 comprenant une étape de dépôt physique en phase vapeur d'une couche d'électrolyte à partir d'une cible de Li₃PO₄ pulvérisée sous azote de manière à obtenir une couche comprenant du LiₓPO_{y}, exempte d'azote, avec 3,6 ≤ x ≤ 6,3 et 1,5 ≤ y ≤ 4.

14. Procédé de fabrication selon la revendication 13 **caractérisé en ce que** la pulvérisation de la cible est effectuée sans magnétron.

## Patentansprüche

1. Fester Elektrolyt, umfassend eine stickstofffreie Schicht, die LiₓPO_{y} umfasst, wobei 3,6 ≤ x ≤ 6,3 und 1,5 ≤ y ≤ 4 ist.

2. Elektrolyt nach dem vorhergehenden Anspruch, wobei x und y derart sind, dass die ionische Leitfähigkeit größer als oder gleich 10⁻⁵ S/cm ist.

3. Elektrolyt nach einem der vorhergehenden Ansprüche, wobei das Li/O-Verhältnis der Schicht aus LiₓPO_{y} größer als 1 und vorteilhafterweise größer als oder gleich 1,5 ist.

4. Elektrolyt nach einem der vorhergehenden Ansprüche, wobei die Schicht, die LiₓPO_{y} umfasst, ein weiteres Element in einer Menge von weniger als 2,5 % und vorzugsweise von weniger als 1 % umfasst.

5. Elektrolyt nach einem der Ansprüche 1 bis 3, wobei die Schicht, die LiₓPO_{y} umfasst, ausschließlich eine Schicht aus LiₓPO_{y} ist.

6. Elektrolyt nach einem der vorhergehenden Ansprüche, wobei die Schicht, die LiₓPO_{y} umfasst, derart ist, dass x gleich 4 und y gleich 2,6 ist.

7. Elektrolyt nach einem der Ansprüche 1 bis 5, wobei die Schicht, die LiₓPO_{y} umfasst, derart ist, dass x gleich 3,6 und y gleich 2,3 ist.

8. Mikrobatterie, umfassend mindestens eine Schicht aus festem Elektrolyt nach einem der vorangehenden Ansprüche.

9. Mikrobatterie nach dem vorhergehenden Anspruch, umfassend eine Schutzschicht der Schicht, die LiₓPO_{y} umfasst, von einer minimalen Dicke von 0,5 nm und einer maximalen Dicke von 35 % der Dicke der Schicht, die LiₓPO_{y} umfasst.

10. Mikrobatterie nach dem vorhergehenden Anspruch, wobei die Schutzschicht ein fester Elektrolyt ist.

11. Mikrobatterie nach dem vorhergehenden Anspruch, wobei die Schutzschicht ein fester Elektrolyt ist, der aus LiPON oder LizSiOw ausgewählt ist.

12. Mikrobatterie nach Anspruch 9, wobei die Schutzschicht 6 aus Al₂O₃, Si, Li₂O ausgewählt ist.

13. Verfahren zur Herstellung eines Elektrolyten nach einem der Ansprüche 1 bis 7, umfassend einen Schritt der physikalischen Dampfabscheidung einer Elektrolytschicht ausgehend von einem Li₃PO₄-Target, das unter Stickstoff derart zerstäubt wird, um eine stickstofffreie Schicht zu erhalten, die LiₓPO_{y} umfasst, wobei 3,6 ≤ x ≤ 6,3 und 1,5 ≤ y ≤ 4 ist.

14. Verfahren zur Herstellung nach Anspruch 13, **dadurch gekennzeichnet, dass** das Zerstäuben des Targets ohne Magnetron durchgeführt wird.

## Claims

1. A solid electrolyte comprising a layer comprising LiₓPO_{y}, free from nitrogen, with 3.6 ≤ x ≤ 6.3 and 1.5 ≤ y ≤ 4.

2. The electrolyte according to the preceding claim, in which x and y are such that the ionic conductivity is greater than or equal to 10⁻⁵ S/cm.

3. The electrolyte according to any one of the preceding claims, in which the Li/O ratio of the layer of LiₓPO_{y} is greater than 1 and advantageously greater than or equal to 1.5.

4. The electrolyte according to any one of the preceding claims, in which the layer comprising LiₓPO_{y} comprises another element in a quantity below 2.5% and advantageously below 1%.

5. The solid electrolyte according to any one of claims 1 to 3, in which the layer comprising LiₓPO_{y} is solely a layer of LiₓPO_{y}.

6. The electrolyte according to any one of the preceding claims, in which the layer comprising LiₓPO_{y} is such that x is equal to 4 and y is equal 2.6.

7. The electrolyte according to any one of claims 1 to 5, in which the layer comprising LiₓPO_{y} is such that that x is equal to 3.6 and y is equal to 2.3.

8. A microbattery comprising at least one layer of solid electrolyte according to any one of the preceding claims.

9. The microbattery according to the preceding claim, comprising a protective layer protecting the layer comprising LiₓPO_{y} with a minimum thickness of 0.5 nm and a maximum thickness of 35% of the thickness of the layer comprising LiₓPO_{y}.

10. The microbattery according to the preceding claim, in which the protective layer is a solid electrolyte.

11. The microbattery according to the preceding claim, in which the protective layer is a solid electrolyte chosen from LiPON or Li_{z}SiO_{w}.

12. The microbattery according to claim 9, in which the protective layer 6 is chosen from Al₂O₃, Si or Li₂O.

13. A method for manufacturing an electrolyte according to any one of claims 1 to 7, comprising a step of physical vapour deposition of a layer of electrolyte using an Li₃PO₄ target sputtered under nitrogen so as to obtain a layer comprising LiₓPO_{y}, free from nitrogen, with 3.6 ≤ x ≤ 6.3 and 1.5 ≤ y ≤ 4.

14. The method according to claim 13, **characterised in that** the sputtering of the target is carried out without a magnetron.
